(19) Europäisches Patentamt

European Patent Office

Office européen des brevets

(11) **EP 3 533 578 B1**

(12) **EUROPEAN PATENT SPECIFICATION**

(45) Date of publication and mention
of the grant of the patent:
**12.05.2021 Bulletin 2021/19**

(21) Application number: **17865536.1**

(22) Date of filing: **06.10.2017**

(51) Int Cl.:
*B29C 33/72* (2006.01)        *B29C 45/17* (2006.01)
*B29C 48/27* (2019.01)        *C08K 5/098* (2006.01)

(86) International application number:
**PCT/JP2017/036523**

(87) International publication number:
**WO 2018/079237 (03.05.2018 Gazette 2018/18)**

(54) **CLEANING AGENT AND METHOD FOR CLEANING RESIN PROCESSING MACHINE**

REINIGUNGSMITTEL UND VERFAHREN ZUR REINIGUNG EINER
HARZVERARBEITUNGSMASCHINE

AGENT NETTOYANT, ET PROCÉDÉ DE NETTOYAGE DE MACHINE À USINER LA RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2016 JP 2016210936**

(43) Date of publication of application:
**04.09.2019 Bulletin 2019/36**

(73) Proprietor: **Asahi Kasei Kabushiki Kaisha
Tokyo 1000006 (JP)**

(72) Inventors:
• **TAKAMORI Hisayoshi
Tokyo 101-8101 (JP)**

• **WATANABE Taku
Tokyo 101-8101 (JP)**
• **NIIHAMA Tomohiro
Tokyo 101-8101 (JP)**

(74) Representative: **D Young & Co LLP
120 Holborn
London EC1N 2DY (GB)**

(56) References cited:
**EP-A1- 0 661 341        CA-A- 857 357
JP-A- H0 693 187        JP-A- H09 208 992
JP-A- S60 139 411        JP-A- 2000 159 928
JP-A- 2007 021 765        US-A- 5 236 514
US-A1- 2014 138 584**

**Description**

TECHNICAL FIELD

This disclosure relates to a purging compound that removes degradation products generated from resins or the like, as well as resins and additives such as dyes and pigments processed in a processing machines after the process of the resin completed. More specifically, this disclosure relates to a purging compound that enables cleaning while forming a film and a sheet by a molding machine, without causing film breaking due to the foaming of the purging compound itself during the cleaning. In addition, this disclosure relates to a method of cleaning resin processing machine using such a purging compound.

BACKGROUND

Resin processing machines such as an extruder and an injection molding machine are commonly used for processes such as coloring, compounding and molding of resins. With this type of processing machine, degradation products (for example, thermal decomposition products, carbonized products, char, etc.) generated from a resin or the like, as well as resins and additives such as dyes and pigments processed in a prescribed molding process, remain in the processing machine after the process. If these residues are left in the machine, they may, for example, mix with the materials for subsequent processes and cause appearance defects in a resulting product or other problems. Particularly in the case of molding a transparent resin, even only a small amount of mixed residue would cause notable appearance defects in a resulting product, because the residues lower the transparency of the resulting product or make black spots as foreign matters which are visually recognized with ease. Therefore, it is desired to completely remove residues from inside a molding machine.

In order to remove the residues from inside a processing machine, workers conventionally disassemble and manually clean the processing machine, or perform a so-called replacing process where the inside of the processing machine is cleaned by directly filling the processing machine with a molding material/resin or the like (hereinafter referred to as "subsequent material") to be used subsequently without stopping the processing machine, and discharging the subsequent material together with the residues. In addition, other methods, such as a cleaning method of introducing a purging compound into the processing machine and performing cleaning inside the processing machine, are also being used.

Among these methods, the method of using a purging compound has been favorably used in recent years because it has excellent cleaning power to remove the residues from inside the processing machine. A purging compound is usually obtained by compounding inorganic filler such as calcium carbonate or talc that increases cleaning power, surfactant, lubricant, crosslinked polymer, high-molecular-weight polymer, foaming agent and the other additives with a base polymer.

For example, JP 2006-219568 A (PTL 1) describes a purging compound obtained by compounding polyethylene oxide, alkyl sulfonate, magnesium stearate and other substances with an olefinic thermoplastic resin.

JP H03-99822 A (PTL 2) describes a purging compound obtained by compounding a ground product of a crosslinked polyethylene film, polyoxyethylene stearyl ether, zinc stearate and other substances with high-density polyethylene.

JP S60-139411 A (PTL 3) describes a purging compound obtained by compounding calcium carbonate, sodium alkylbenzene sulfonate, sodium stearate, zinc stearate and other substances with linear low-density polyethylene.

JP 4504699 B (PTL 4) describes a purging compound obtained by mixing sodium bicarbonate with low-density polyethylene containing low-density polyethylene and polypropylene wax.

JP 4781908 B (PTL 5) describes a purging compound obtained by compounding oleic acid amide, glycerin monostearate and other substances with high-pressure-produced polyethylene

US5236514 (PTL 6) discloses a purging compound comprising a thermoplastic resin, a fatty acid salt, which may be either a sodium or potassium or calcium or zink salt, and an inorganic filler.

CITATION LIST

Patent Literature

    PTL 1: JP 2006-219568 A
    PTL 2: JP H03-99822 A
    PTL 3: JP S60-139411 A

PTL 4: JP 4504699 B
PTL 5: JP 4781908 I
PTL 6: US5236514

SUMMARY

(Technical Problem)

However, the purging compounds described in PTLs 1 to 3 cannot provide sufficient cleaning effects. In addition, when the purging compounds are used to clean a molding machine used for forming films such as a resin film and a resin sheet, moisture adsorbed on the polyethylene oxide, alkylbenzene sulfonate, polyoxyethylene stearyl ether and sodium alkylbenzene sulfonate vaporizes, and film breakage due to the foaming of the purging compound itself occurs conspicuously during the cleaning, rendering it difficult to perform cleaning while forming a film.

It is possible to curb the moisture absorption of the purging compound by storing the purging compound in an environment blocked from the outside air such as a paper bag with an aluminum inner bag. However, once the bag is opened and the purging compound is brought into contact with the outside air, it absorbs moisture immediately. This not only renders it difficult to perform cleaning while forming a film, but also causes problems of poor long-term storability and poor long-term stability.

If these purging compounds are dried to remove the moisture and then used immediately, it is possible to perform cleaning while forming a film. However, the working efficiency drops significantly because it takes time for the drying process and a special process of providing a dryer is required.

On the other hand, although the purging compound described in PTL 4 provides recognized cleaning effects, it is difficult to perform cleaning while forming a film with this purging compound because sodium bicarbonate is used as a foaming agent.

In addition, although it is possible to perform cleaning while forming a film using the purging compound described in PTL 5, the cleaning effects thereof are insufficient and further improvement is required.

As described above, conventional purging compounds fail to provide sufficient cleaning effects or cause film breakage due to the foaming of the purging compound itself, which renders it difficult to perform cleaning while forming a film. As a result, much time and labor is required for, for example, stopping the process after film formation, performing cleaning only inside the extruder, and then resuming the operation, which significantly reduce the working efficiency.

It could thus be helpful to provide a purging compound that has excellent cleaning performance and enables cleaning while forming a film. It could also be helpful to provide a method of cleaning a resin processing machine using such a purging compound.

(Solution to Problem)

We made intensive studies to solve the above problems. As a result, we have found that a purging compound where the composition has a specific ratio between olefinic thermoplastic resin and fatty acid zinc salt and the weight reduction rate after drying is not more than a specific value can solve the above problems, and have completed the present disclosure.

We thus provide the following [1] to [6].

[1] A purging compound comprising olefinic thermoplastic resin and fatty acid zinc salt, wherein a weight reduction rate after drying at 80 °C for 2 hours is 0.2 % or less, a content of the fatty acid zinc salt is 15 parts by mass to 50 parts by mass with respect to 100 parts by mass of the olefinic thermoplastic resin, and the purging compound further comprises inorganic filler.

[2] The purging compound according to [1], wherein a content of zinc is 0.05 parts by mass to 12.0 parts by mass with respect to 100 parts by mass of the olefinic thermoplastic resin.

[3] The purging compound according to [1] or [2], wherein the olefinic thermoplastic resin is a polyethylene resin.

[4] The purging compound according to any one of [1] to [3], wherein a content of the inorganic filler is 5 parts by mass to 200 parts by mass with respect to 100 parts by mass of the olefinic thermoplastic resin.

[5] Use of the purging compound according to any one of [1] to [4] in a resin processing machine.

[6] A method of cleaning a sheet and/or a film manufacturing machine while forming a film continuously by using the purging compound according to any one of [1] to [4].

(Advantageous Effect)

According to the present disclosure, it is possible to provide a purging compound that has excellent cleaning performance and enables cleaning while forming a film. In addition, according to the present disclosure, it is possible to provide a method of cleaning a resin processing machine using such a purging compound.

DETAILED DESCRIPTION

The following describes an embodiment of the present disclosure in detail. Note that the following embodiment is an example for explaining the present disclosure and that the present disclosure is not limited to the embodiment. Furthermore, various modifications may be made to the present disclosure without departing from the gist thereof.

(Purging Compound)

The purging compound of the present embodiment contains at least an olefinic thermoplastic resin, fatty acid zinc salt, and inorganic filler and optionally other components.

The purging compound of the present embodiment is characterized in that the weight reduction rate after drying at 80 °C for 2 hours is 0.2 % or less.

With the purging compound of the present embodiment, it is possible to obtain excellent cleaning performance, curb the foaming caused by the water contained in the purging compound during film formation, and clean a resin processing machine while forming a film.

In addition, with the purging compound of the present embodiment, it is possible to curb moisture absorption and thereby obtain excellent long-term storability.

Furthermore, with the purging compound of the present embodiment, it is unnecessary to include a special process of preliminarily drying the purging compound or stop the resin processing machine for cleaning, so that continuous cleaning can be performed while performing resin processing such as film formation. In this way, the cleaning efficiency can be further improved.

The following describes the respective components of the purging compound of the present embodiment in detail.

-Olefinic Thermoplastic Resin-

Specific examples of the olefinic thermoplastic resin used in the present embodiment include polyethylene resins such as high-density polyethylene, low-density polyethylene and linear low-density polyethylene, polypropylene, polybutene, and propylene-ethylene copolymer. Among these, polyethylene resins, particularly high-density polyethylene, low-density polyethylene and linear low-density polyethylene are preferable.

The olefinic thermoplastic resin may be used alone or in combination of two or more.

Here, when two or more olefinic thermoplastic resins are used in combination, it is possible to use two or more olefinic thermoplastic resins with different structures in combination, or use two or more olefinic thermoplastic resins with different molecular weights in combination.

The melt flow rate (MFR) of the olefinic thermoplastic resin is preferably 0.01 g/10 min to 20 g/10 min and more preferably 0.05 g/10 min to 10 g/10 min, from the viewpoints of excellent cleaning power and easy replacement to the subsequent material after cleaning.

The melt flow rate of the olefinic thermoplastic resin means a melt flow rate measured in accordance with ISO-R1133, where the measurement conditions are a temperature of 190 °C and a load of 2.16 kg.

When a thermoplastic resin is used alone, it is preferable to use one having a melt flow rate within the above ranges. When a plurality of olefinic thermoplastic resins are used, it is preferable to mix those having a melt flow rate within the above ranges, and those having a melt flow rate outside the above ranges and make an adjustment so that the melt flow rate after mixing is within the above ranges.

-Fatty Acid Zinc Salt-

The fatty acid moiety of the fatty acid zinc salt preferably has a carbon number of 6 to 28 and more preferably of 10 to 22. Specific examples of the fatty acid zinc salt include saturated fatty acid zinc salt such as zinc caproate, zinc caprylate, zinc caprate, zinc laurate, zinc myristate, zinc palmitate, zinc stearate, zinc behenate and zinc montanate, and unsaturated fatty acid zinc salt such as zinc oleate and zinc erucate.

The fatty acid zinc salt may be used alone or in combination of two or more.

In the present embodiment, the content of fatty acid zinc salt is 15 parts by mass to 50 parts by mass with respect to 100 parts by mass of the olefinic thermoplastic resin, preferably 15 parts by mass to 35 parts by mass with respect to 100 parts by mass of the olefinic thermoplastic resin, from the viewpoints of excellent cleaning performance, stable continuous film formation cleaning, and stable extrudability of the purging compound composition.

In addition, in the present embodiment, the content of zinc contained in the purging compound composition is preferably 0.05 parts by mass to 12.0 parts by mass and more preferably 0.1 parts by mass to 10.0 parts by mass with respect to 100 parts by mass of the olefinic thermoplastic resin.

The content of zinc contained in the purging compound composition can be measured by an ICP optical emission spectrometer (for example, iCAP 6300 manufactured by Thermo Fisher Scientific K.K.).

-Inorganic Filler-

Any publicly-known conventional inorganic filler used for resin films and resin sheets may be used as the inorganic filler of the present embodiment without particular limitation. Specific examples include metal carbonates such as calcium carbonate, magnesium carbonate and barium carbonate, metal sulfates such as calcium sulfate and barium sulfate, and silicates such as kaolin, clay and diatomaceous earth. Among these, calcium carbonate and magnesium carbonate are particularly preferable.

The inorganic filler may be used alone or in combination of two or more.

The average particle diameter of the inorganic filler is not particularly limited. However, it is preferably 0.1 $\mu$m to 100 $\mu$m, more preferably 0.5 $\mu$m to 50 $\mu$m, and particularly preferably 1 $\mu$m to 30 $\mu$m.

When the average particle diameter of the inorganic filler is within the above ranges, the dispersibility is good, and breakage during film formation or other problems hardly occur. In this way, it is possible to perform continuous film formation cleaning more stably.

The average particle diameter of the inorganic filler can be determined with a laser diffraction method (using SALD-2000 manufactured by Shimadzu Corporation, for example).

In the present embodiment, the content of the inorganic filler is preferably 5 parts by mass to 200 parts by mass, more preferably 10 parts by mass to 150 parts by mass, and particularly preferably 20 parts by mass to 100 parts by mass with respect to 100 parts by mass of the olefinic thermoplastic resin, from the viewpoints of the effect of physically scraping off the residues remaining inside the processing machine, stable continuous film formation cleaning, and stable extrudability of the purging compound composition.

The water content of the inorganic filler used for preparing the purging compound is preferably 0.2 mass% or less and particularly preferably 0.1 mass% or less, from the viewpoint of more stable continuous film formation cleaning.

-Other Components-

The purging compound of the present embodiment may contain other resins and various additives according to the cleaning purpose and the performance required for the application, as long as the weight reduction rate of the purging compound composition after drying at 80 °C for 2 hours does not exceed 0.2 %.

The content of the other components may be, for example, 10 parts by mass or less and preferably 5 parts by mass or less with respect to 100 parts by mass of the olefinic thermoplastic resin.

The following describes the physical properties of the purging compound of the present embodiment.

The melt flow rate (MFR) of the purging compound of the present embodiment is preferably 0.05 g/10 min to 75 g/10 min and more preferably 0.1 g/10 min to 50 g/10 min, from the viewpoints of excellent cleaning power and easy replacement to the subsequent material after cleaning.

The melt flow rate of the olefinic thermoplastic resin means a melt flow rate measured in accordance with ISO-R1133, where the measurement conditions are a temperature of 190 °C and a load of 2.16 kg.

For the purging compound of the present embodiment, the weight reduction rate after drying at 80 °C for 2 hours is 0.2 % or less, preferably 0.15 % or less, and particularly preferably 0.1 % or less from the viewpoint of stable film formation cleaning. In addition, the weight reduction rate is preferably 0.01 % or more and more preferably 0.025 % or more.

When the weight reduction rate is more than 0.2 %, a special process of preliminary drying the purging compound is required. If the purging compound in this case is used as it is without the drying process, moisture adsorbed on the purging compound vaporizes, and film breakage due to foaming occurs conspicuously. As a result, it is difficult to perform cleaning while forming a film continuously. In addition, when the weight reduction rate is less than 0.01 %, sufficient cleaning performance may not be obtained.

The weight reduction rate of the purging compound after drying at 80 °C for 2 hours is determined by leaving the purging compound in an atmosphere with a constant temperature of 25 °C and a constant humidity of 70 % RH for 72 hours, using a constant-temperature drier (for example, DKN 302 manufactured by Yamato Scientific Co., Ltd.) to dry the purging compound at a set temperature of 80 °C under atmospheric pressure for 2 hours, obtaining the masses of the purging compound before and after the drying, and calculating the weight reduction rate based on the masses specifically with the method described in the EXAMPLES section.

In the present embodiment, examples of the method of setting the weight reduction rate after drying at 80 °C for 2 hours within the aforementioned ranges include a method of adjusting the water content of the inorganic filler and various additives used for preparing the purging compound. In a case where the purging compound contains highly absorbent additives such as a hydrophilic surfactant or polyethylene oxide, a special process such as drying the purging compound to remove the moisture just before use is required in order to satisfy the ranges of the weight reduction rate set in the present embodiment, which greatly decreases the working efficiency.

(Method of Producing Purging Compound)

The method of producing the purging compound of the present embodiment is not particularly limited. Examples of a preferred production method include a method of melting and kneading the aforementioned olefinic thermoplastic resin and fatty acid zinc salt, and inorganic filler and other components to be compounded if necessary, with a melt-kneading apparatus, extruding the obtained melt-kneaded product in strand form, and forming the product into granular form.

The melt-kneading apparatus used here may be a common apparatus used for compounding and melt-kneading various components. Examples thereof include a premixing apparatus such as a tumbler, a ribbon blender and a super mixer, a weight type feeder, a kneader, a single screw extruder or twin screw extruder, a co-kneader, and a Banbury mixer.

The melt-kneading apparatus is preferably an extruder from the viewpoint of thoroughly kneading the olefinic thermoplastic resin and the inorganic filler.

In addition, when the melting and kneading is performed using an extruder, it is desirable to include open deaeration where dissolved air is exhausted through a vent under atmospheric pressure, and, if necessary, depressurization deaeration where dissolved air is exhausted through a vent under reduced pressure.

The cylinder temperature during the melting and kneading using an extruder is preferably set to 300 °C or lower, more preferably 280 °C or lower, even more preferably 260 °C or lower, and particularly preferably 240 °C or lower.

It is desirable that the residence time of molten resin in the extruder is as short as possible, and the cylinder temperature is set in consideration of this.

In the present embodiment, it is more preferable to use a twin screw extruder than other extruders.

When using a twin screw extruder, it is easy to prevent aggregation of inorganic filler during the melting and kneading of the olefinic resin, fatty acid zinc salt and inorganic filler, and can be easily uniformly dispersed in the olefinic thermoplastic resin. In this way, the extrudability is stabilized, and discharge rate fluctuation of the strand discharged from the extruder and other problems tend to be reduced.

(Method of Using Purging compound)

The purging compound of the present embodiment can be used as it is as a purging compound or used as a mixture with a subsequent material (posterior material) after discharging a preceding material (prior material). For example, the purging compound may be previously simply dry-blended with the subsequent material and then used, or may be used while mixing with the subsequent material at a certain ratio using a feeder. Furthermore, the purging compound may be previously melt and kneaded with the subsequent material using a resin processing machine and then used.

In the present embodiment, it is preferable to use the purging compound as a mixture with the subsequent material, from the viewpoint of easy replacement to the subsequent material and stable continuous film formation cleaning.

When the purging compound is used as a mixture with the subsequent material, the mixing ratio is preferably 100 parts by mass to 900 parts by mass of the subsequent material with respect to 100 parts by mass of the purging compound, more preferably 200 parts by mass to 750 parts by mass of the subsequent material with respect to 100 parts by mass of the purging compound, and even more preferably 300 parts by mass to 600 parts by mass of the subsequent material with respect to 100 parts by mass of the purging compound.

In addition, when the purging compound is used as a mixture with the subsequent material, the content of zinc contained in the resin mixture composed of the purging compound and the subsequent material is preferably 0.02 parts by mass to 5.0 parts by mass and more preferably 0.2 parts by mass to 3.0 parts by mass with respect to 100 parts by mass of the resin mixture, from the viewpoint of maintaining the film formability and high cleaning performance.

The content of zinc contained in the resin mixture can be measured by an ICP optical emission spectrometer (for example, iCAP 6300 manufactured by Thermo Fisher Scientific K.K.).

The resin contained in the preceding material is preferably an olefinic resin, and high-density polyethylene, low-density polyethylene and linear low-density polyethylene are particularly preferable among olefinic resins.

The resin contained in the subsequent material is preferably an olefinic resin, and high-density polyethylene, low-density polyethylene and linear low-density polyethylene are particularly preferable among olefinic resins.

The purging compound of the present embodiment can be used for any type of resin processing machine without particular limitation. However, the purging compound is particularly suitably used for a sheet and/or a film manufacturing machine, because it curb the foaming caused by heating and enables cleaning while forming a film.

(Method of Cleaning Sheet and/or Film Manufacturing Machine)

The method of cleaning a sheet and/or a film manufacturing machine of the present embodiment is characterized in cleaning a sheet and/or a film manufacturing machine with the purging compound of the present embodiment while forming a film continuously.

The purging compound of the present embodiment may be used in a way as described above.

EXAMPLES

The following describes the present disclosure in more detail with reference to Examples and Comparative Examples, yet the present disclosure is not limited thereto.

The respective components used in Examples or Comparative Examples are as follows.

<Component (A): olefinic thermoplastic resin>

(A-1) low-density polyethylene (MFR: 2 g/10 min)
(A-2) linear low-density polyethylene (MFR: 0.8 g/10 min)

<Component (B): fatty acid zinc salt>

(B-1) zinc laurate (zinc content: 14.0 mass%)
(B-2) zinc stearate (zinc content: 10.3 mass%)

<Component (C): inorganic filler>

(C-1) calcium carbonate (average particle diameter: 7 $\mu$m)

<Component (D): fatty acid metal salt>

(D-1) calcium stearate
(D-2) magnesium stearate

<Component (E): surfactant>

(E-1) sodium alkylbenzene sulfonate (product name: NEOPELEX G-15, manufactured by Kao Corporation)
(E-2) polyethylene glycol (number average molecular weight: 11,000)

(Examples 1 to 8, 10 and 11, Reference Examples 9 and 12, and Comparative Examples 1 to 6)

A resin composition containing the respective components at the ratios as listed in Tables 1 and 2 was preliminarily mixed for 5 minutes using a tumbler blender, and the obtained mixture was melted and kneaded using a twin screw extruder. The melting and kneading was performed using a twin screw extruder (TEM26SS manufactured by Toshiba Machine Co., Ltd.) under the conditions of a cylinder set temperature of 210 °C and a feed rate of 15 kg/hour. The melt-kneaded product thus obtained was extruded into strand form, cooled with water, and then cut by a strand cutter to obtain a purging compound in pellet form.

The method of evaluating the purging compounds in Examples or Comparative Examples is as follows.

[Zinc Content of Purging Compound]

Sampling was performed in the obtained purging compound pellets, and the sample was measured by an ICP optical emission spectrometer (iCAP 6300 manufactured by Thermo Fisher Scientific K.K.) to calculate the content of zinc contained in the purging compound. The zinc content was expressed in part by mass with respect to 100 parts by mass of the olefinic thermoplastic resin.

[Melt Flow Rate]

The melt flow rate (g/10 min) of the obtained purging compound pellets was measured under the conditions of a temperature of 190 °C and a load of 2.16 kg in accordance with ISO-R1133.

[Weight Reduction Rate after Drying at 80 °C for 2 Hours]

The purging compound pellets were left in an atmosphere with a constant temperature of 25 °C and a constant humidity of 70 % RH for 72 hours, and the mass of the resulting purging compound pellets was measured. Then the above mentioned pretreated pellets were dried using a constant-temperature drier (DKN 302 manufactured by Yamato Scientific Co., Ltd.) at a set temperature of 80 °C under atmospheric pressure for 2 hours, and then the mass was measured again.

The weight reduction rate of the obtained purging compound pellets was determined by the following formula.

$$(W1 - W2)/W1 \times 100 \ [\%]$$

where W1 means the mass before drying of the pellets subjected to the performance evaluation, and W2 means the mass after drying of the pellets subjected to the performance evaluation.

[Cleaning Property and Film Forming Property]

First, 150 g of a green-colored molding material of low-density polyethylene, which was a preceding resin, was put into a sheet molding machine (with a width of 50 mm and a screw diameter of 19 mm) at a cylinder temperature of 180 °C to form a sheet.

Subsequently, 200 g of a resin mixture obtained by mixing the aforementioned purging compound with low-density polyethylene, which was a subsequent resin, at the ratio listed in Tables 1 and 2 was charged into the sheet molding machine to clean the inside of the machine.

After the cleaning finished, the cleaning and film forming properties of the purging compound pellets obtained in Examples and Comparative Examples were evaluated based on the states of the processing machine and the subsequent resin according to the following evaluation criteria.

-Cleaning Property-

Excellent: the green-colored molding material was completely removed.

Good: the green-colored molding material was almost removed.
Poor: the green-colored molding material remained.

-Film Forming Property-

Good: the sheet itself did not foam and was able to be wound.
Fair: although foaming was observed in the sheet, the sheet was still able to be wound.
Poor: the sheet itself foamed conspicuously and was unable to be wound.

[Zinc Content in Resin Mixture]

Sampling was performed in the resin mixture composed of the purging compound and the subsequent resin prepared in the aforementioned [cleaning property and film forming property] evaluation, and the sample was measured by an ICP optical emission spectrometer (iCAP 6300 manufactured by Thermo Fisher Scientific K.K.) to calculate the zinc content in the resin mixture. The zinc content was expressed in part by mass with respect to 100 parts by mass of the resin component of the entire mixture.

Table 1 lists the compositions of the purging compounds of Examples 1 to 8, 10 and 11 and Reference Examples 9 and 12 and the evaluation results.

*Examples 9 and 12 are Reference Examples

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Component (A-1) | Part by mass | 100 | 100 | | | 100 | 100 | 100 | 100 | 100 | 100 | 100 | 100 |
| Component (A-2) | | | | 100 | 100 | | | | | | | | |
| Component (B- 1) | | 20 | 33 | 33 | 33 | 15 | | 33 | 33 | 15 | 45 | 15 | 0.3 |
| Component (B-2) | | | | | | | 15 | | | | | | |
| Component (C-1) | | 80 | 90 | 90 | 90 | 40 | 40 | 90 | 90 | | 90 | 40 | 40 |
| Component (D-1) | | | | | | | | | | | | | |
| Component (D-2) | | | | | | | | | | | | | |
| Component (E-1) | | | | | | | | | | | | | |
| Component (E-2) | | | | | | | | | | | | 3 | |
| Zinc content with respect to 100 parts by mass of the polyolefin resin in the purging compound composition | Part by mass | 2.8 | 4.6 | 4.6 | 4.6 | 2.1 | 1.5 | 4.6 | 4.6 | 2.1 | 6.3 | 2.0 | 0.04 |
| MFR | [g/10min] | 13 | 21 | 25 | 25 | 9 | 10 | 21 | 21 | 16 | 34 | 11 | 1 |

(continued)

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Mixing ratio of purging compound/ subsequent material (in mass) | [-] | 20/80 | 20/80 | 20/80 | 40/60 | 20/80 | 20/80 | 5/95 | 60/40 | 20/80 | 20/80 | 20/80 | 100/0 |
| Zinc content with respect to 100 parts by mass of the resin component containing the subsequent material | Part by mass | 0.57 | 0.93 | 0.93 | 1.87 | 0.42 | 0.31 | 0.23 | 2.80 | 0.42 | 1.27 | 0.42 | 0.04 |
| Cleaning property | [-] | Good | Excellent | Excellent | Excellent | Good | Good | Good | Good | Excellent | Excellent | Good | Fair |
| Film forming property | [-] | Good | Good | Good | Good | Good | Good | Good | Fair | Good | Good | Fair | Good |
| Weight reduction rate after drying at 80 °C for 2 hours [%] | [%] | 0.08 | 0.08 | 0.07 | 0.07 | 0.03 | 0.07 | 0.08 | 0.08 | 0.05 | 0.09 | 0.2 | 0.02 |

Table 2 lists the compositions of the purging compounds of Comparative Examples 1 to 6 and the evaluation results.

| | | Comparative Example 1 | Comparative Example 2 | Comparative Example 3 | Comparative Example 4 | Comparative Example 5 | Comparative Example 6 |
|---|---|---|---|---|---|---|---|
| Component (A-1) | | 100 | 100 | 100 | 100 | 100 | 100 |
| Component (A-2) | Part by mass | | | | | | |
| Component (B-1) | Part by mass | | | | | 15 | 3 |
| Component (B-2) | Part by mass | | | | | | |
| Component (C-1) | Part by mass | 40 | 80 | 40 | 40 | 40 | 300 |
| Component (D-1) | Part by mass | 15 | 20 | | | | |
| Component (D-2) | Part by mass | | | | | | |
| Component (E-1) | Part by mass | | | 15 | | | |
| Component (E-2) | Part by mass | | | | 15 | 10 | |
| Zinc content with respect to 100 parts by mass of the polyolefin resin in the purging compound composition | Part by mass | 0.0 | 0.0 | 0.0 | 0.0 | 2.1 | 0.42 |
| MFR | [g/10min] | 2 | 3 | 11 | 10 | 12 | 0.8 |
| Mixing ratio of purging compound/subsequent material (in mass) | [-] | 20/80 | 20/80 | 20/80 | 20/80 | 20/80 | 100/0 |
| Zinc content with respect to 100 parts by mass of the resin component containing the subsequent material | Part by mass | 0.0 | 0.0 | 0.0 | 0.0 | 0.42 | 0.42 |
| Cleaning property | [-] | Poor | Poor | Good | Good | Good | Good |
| Film forming property | [-] | Good | Good | Poor | Poor | Poor | Poor |
| Weight reduction rate after drying at 80 °C for 2 hours | [%] | 0.1 | 0.05 | 0.55 | 0.45 | 0.42 | 0.3 |

INDUSTRIAL APPLICABILITY

According to the present disclosure, it is possible to provide a purging compound that has excellent cleaning performance and enables cleaning while forming a film. The purging compound of the present disclosure has excellent cleaning performance and excellent long-term storability. In addition, it is unnecessary to perform a special process of preliminarily drying the purging compound or stop the cleaning of a sheet and/or a film manufacturing machine, so that cleaning can be performed continuously while forming a film and the cleaning efficiency can be further improved. Therefore, the purging compound of the present disclosure is highly valued in industry.

**Claims**

1. A purging compound comprising olefinic thermoplastic resin and fatty acid zinc salt, wherein a weight reduction rate after drying at 80 °C for 2 hours is 0.2 % or less,
   a content of the fatty acid zinc salt is 15 parts by mass to 50 parts by mass with respect to 100 parts by mass of the olefinic thermoplastic resin, and
   the purging compound further comprises inorganic filler.

2. The purging compound according to claim 1, wherein a content of zinc is 0.05 parts by mass to 12.0 parts by mass with respect to 100 parts by mass of the olefinic thermoplastic resin.

3. The purging compound according to claim 1 or 2, wherein the olefinic thermoplastic resin is a polyethylene resin.

4. The purging compound according to any one of claims 1 to 3, wherein a content of the inorganic filler is 5 parts by mass to 200 parts by mass with respect to 100 parts by mass of the olefinic thermoplastic resin.

5. Use of the purging compound according to any one of claims 1 to 4 in a resin processing machine.

6. A method of cleaning a sheet and/or a film manufacturing machine while forming a film continuously by using the purging compound according to any one of claims 1 to 4.

**Patentansprüche**

1. Spülverbindung, die olefinisches Thermoplastharz und Fettsäurezinksalz umfasst, wobei eine Gewichtsverringerungsrate nach dem Trocknen bei 80 °C für 2 Stunden 0,2 % oder weniger beträgt,
   ein Fettsäurezinksalzgehalt 15 Massenteile bis 50 Massenteile, bezogen auf 100 Massenteile des olefinischen Thermoplastharzes, beträgt und
   die Spülverbindung ferner anorganischen Füllstoff umfasst.

2. Spülverbindung nach Anspruch 1, wobei ein Zinkgehalt 0,05 Massenteile bis 12,0 Massenteile, bezogen auf 100 Massenteile des olefinischen Thermoplastharzes, beträgt.

3. Spülverbindung nach Anspruch 1 oder 2, wobei es sich bei dem olefinischen Thermoplastharz um ein Polyethylenharz handelt.

4. Spülverbindung nach einem der Ansprüche 1 bis 3, wobei ein Gehalt des anorganischen Füllstoffs 5 Massenteile bis 200 Massenteile, bezogen auf 100 Massenteile des olefinischen Thermoplastharzes, beträgt.

5. Verwendung der Spülverbindung nach einem der Ansprüche 1 bis 4 in einer Harzverarbeitungsmaschine.

6. Verfahren zum Reinigen einer Maschine zur Herstellung von Bögen und/oder Folien, während eine Folie unter Verwendung der Spülverbindung nach einem der Ansprüche 1 bis 4 kontinuierlich gebildet wird.

**Revendications**

1. Composé pour épuration comprenant une résine thermoplastique oléfinique et un sel de zinc d'acide gras, une vitesse de réduction pondérale après séchage à 80 °C pendant 2 heures étant de 0,2 % ou moins,
une teneur du sel de zinc d'acide gras étant de 15 parties en masse à 50 parties en masse par rapport à 100 parties en masse de la résine thermoplastique oléfinique, et
le composé pour épuration comprenant en outre une charge inorganique.

2. Composé pour épuration selon la revendication 1, une teneur en zinc étant de 0,05 partie en masse à 12,0 parties en masse par rapport à 100 parties en masse de la résine thermoplastique oléfinique.

3. Composé pour épuration selon la revendication 1 ou 2, la résine thermoplastique oléfinique étant une résine de polyéthylène.

4. Composé pour épuration selon l'une quelconque des revendications 1 à 3, une teneur de la charge inorganique étant de 5 parties en masse à 200 parties en masse par rapport à 100 parties en masse de la résine thermoplastique oléfinique.

5. Utilisation du composé pour épuration selon l'une quelconque des revendications 1 à 4 dans une machine de traitement de résine.

6. Procédé de nettoyage d'une machine de fabrication d'une feuille et/ou d'un film tout en formant un film de manière continue en utilisant le composé d'épuration selon l'une quelconque des revendications 1 à 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006219568 A
- JP H0399822 A
- JP S60139411 A

- JP 4504699 B
- JP 4781908 B
- US 5236514 A